# EUROPEAN PATENT APPLICATION

(11) **EP 3 501 783 A1**
(43) Date of publication of application: **26.06.2019**
(21) Application number: 17210540.5
(22) Date of filing: 22.12.2017
(51) Int. Cl.: B29C 47/68, B01D 29/01, B01D 29/03, B01D 29/64

(54) **FILTERING PLATE AND METHOD FOR MAKING THE SAME AND FILTERING DEVICE HAVING THE SAME**

(71) Applicant: Kun Sheng Machine Co., Ltd., Taichung City (TW)
(72) Inventor: TSAI, CHUN-YU, Long Jing Dist., Taichung City (TW)
(74) Representative: Lang, Christian

(57) **Abstract**

A filtering plate (1) and a method for making the same and a filtering device having the same are provided. The filtering plate (1) includes: a plate body (10), integrally formed of metal as one piece; a plurality of holed units (20), each holed unit (20) penetrating the plate body (10) and including a big hole and a plurality of small holes (13) communicated with the big hole, the small hole (13) being formed by laser processing and having a first end (141) communicated with the big hole and a second end (142), the first end (141) being greater than the second end (142) in cross-sectional area.

## Description

### BACKGROUND OF THE INVENTION

### Field of the Invention

The present invention relates to a filtering plate and a method for making the same and a filtering device having the same.

### Description of the Prior Art

Waste plastic raw materials are first crushed and dried in a recycling granulation system, and then fed into a device having an extrusion screw and then heated to a certain temperature to be flowable. The flowable waste plastic materials then pass through a filtration system to filter out non-plastic materials. The filtered plastic materials are extruded out from a granulation plate, cooled and cut so that the filtered plastic materials are granulated.

The filtering plate of a conventional granulator is holed by mechanical processing to form a plurality of filtering holes, and the filtering holes are straight and of the same diametrical dimension. As a result, in addition to large discharge pressure, problem of obstruction of filtered materials can also be caused and it is not durable. In addition, since mechanical processing has a limit to form the small hole having a diametrical dimension not smaller than 0.3 millimeters, there is a known technique of obtaining smaller filtering holes by filtering layers layered. However, such conventional multi-layered filtering plate has more components, high costs, and poor structural strength due to the combined structure, and is easily obstructed and collects filth, because of the non-expanded filtering holes and gaps between the layers of the multi-layered filtering plate, so that there is a great discharge pressure caused.

The present invention is, therefore, arisen to obviate or at least mitigate the above mentioned disadvantages.

### SUMMARY OF THE INVENTION

An object of the present invention is to provide a filtering plate and a method for making the same and a filtering device having the same, in which the filtering plate is good in structural strength and provided with filtering holes each having a small diametrical dimension.

To achieve the above and other objects, a filtering plate is provided, including: a plate body, integrally formed of metal as one piece; a plurality of holed units, each holed unit penetrating the plate body and including a big hole and a plurality of small holes communicated with the big hole, the small hole being formed by laser processing and having a first end communicated with the big hole and a second end, the first end being greater than the second end in cross-sectional area.

To achieve the above and other objects, a filtering device is further provided, including at least one of filtering plate, further including: a main body, including a chamber, receiving the at least one filtering plate, the at least one filtering plate defining an infeed space and at least one discharge space in the chamber; a scrape device, including at least one scraper rotatably located at the second face of the filtering plate, configured for scraping residues on the second face.

To achieve the above and other objects, a method of making the above-mentioned filtering plate is further provided, including following steps of: providing the plate body; forming the plurality of large holes on the plate body by mechanical processing from the first face; using a laser, in a direction from the first face toward the second face, to form the plurality of small holes on a bottom face within respective one of the plurality of large hole in such a manner that a laser head projecting the laser is moved and kept in a fixed relative distance, wherein the fixed relative distance is defined as that on a basis of the second face the laser head is nonlower than the first face.

The present invention will become more obvious from the following description when taken in connection with the accompanying drawings, which show, for purpose of illustrations only, the preferred embodiment (s) in accordance with the present invention.

### BRIEF DESCRIPTION OF THE DRAWINGS

Fig. 1 is a perspective view of a preferred embodiment of the present invention;
Fig. 2 is a side view of a preferred embodiment of the present invention;
Fig. 3 is a partial enlarged drawing of Fig. 2;
Fig. 4 is a cross-sectional view taken along line A-A Fig. 1;
Fig. 5 is a partial enlarged drawing of Fig. 4;
Fig. 6 is a partial enlarged drawing of Fig. 5; and
Fig. 7 is a drawing showing a filtering device according to a preferred embodiment of the present invention.

### DETAILED DESCRIPTION OF THE PREFERRED EMBODIMENTS

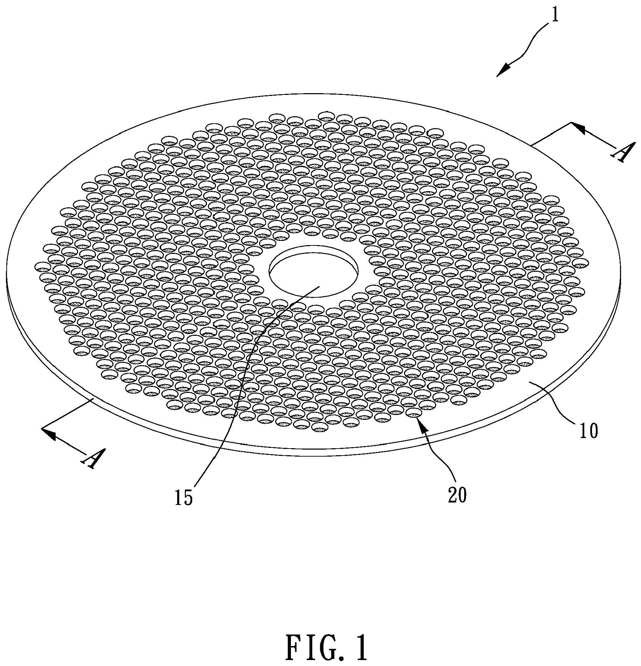

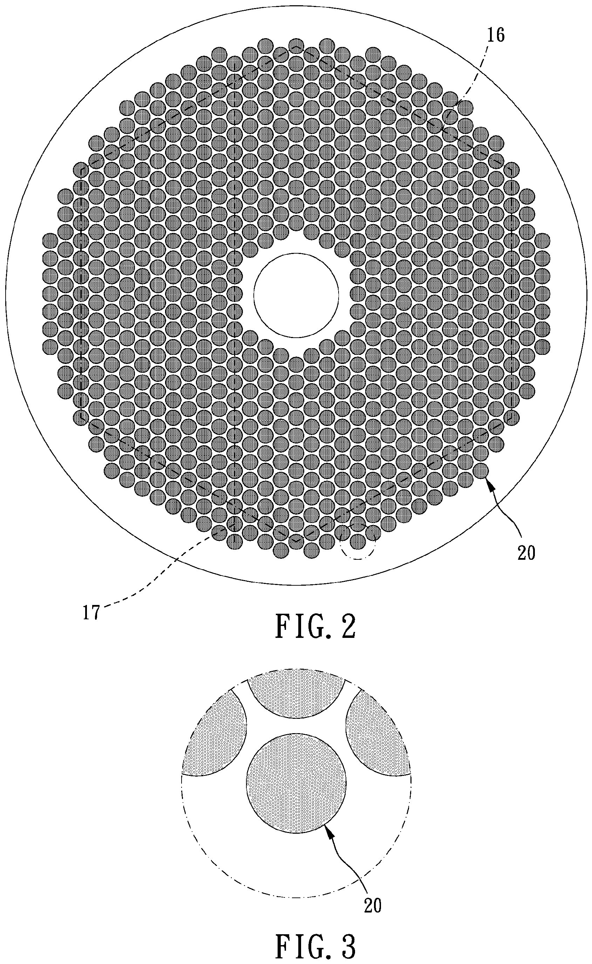

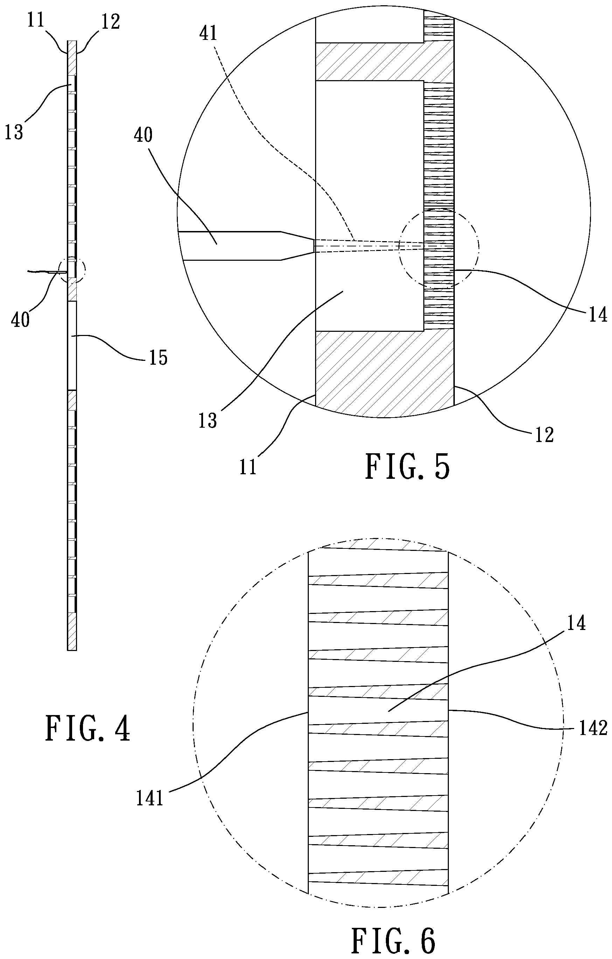

Figs. 1-6 show a filtering plate according to a preferred embodiment of the present invention. The filtering plate 1 includes a plate body 10 and a plurality of holed units 20.

The plate body 10 is integrally formed of metal as one piece and includes a first face 11 and a second face 12 in a widthwise direction thereof. Each of the plurality of holed units 20 penetrates the first face 11 and the second face 12 of the plate body 10, and each of the plurality of holed units 20 includes a large hole 13 and a plurality of small holes 14 communicated with the large hole 13 and extends along the widthwise direction. Each of the plurality of small holes 14 includes a first end 141 and a second end 142, and the first end 141 is larger than the second end 142 in cross-sectional area. Whereby, the filtering plate is good in structural strength and provided with filtering holes (the small holes 14) each having a small diametrical dimension.

In this embodiment, the large hole 13 is adjacent the first face 11, the small hole 14 is adjacent the second face 12, the first end 141 of respective one of the plurality of small holes 14 is connected with the large hole 13, and the second end 142 of respective one of the plurality of small holes 14 is adjacent the second face 12. It is noted that the term "adjacent" may be referred to "hole opening being aligned with the first face 11 or the second face 12" or "hole opening being lower or higher than the first face 11 or the second face 12". In other embodiments, the second end of respective one of the plurality of small holes is connected with the large hole, and the first end of respective one of the plurality of small holes is adjacent the second face.

A distance between the first face 11 and the second face 12 is 1.5 to 6.0 millimeters. A number of the small holes 14 of each of the plurality of holed units 20 may be 800 to 1500. A distance between the first end 141 and the second end 142 is 0.2 to 3.5 millimeters. Preferably, the small hole 14 has a diametrical dimension of 0.03 millimeters at the first end 141, and the small hole 14 has a diametrical dimension of 0.30 millimeters at the second end 142. Preferably, the small hole 14 conically gradually expands from the second end 142 toward the first end 141. In this embodiment, a distance between the first face 11 and the second face 12 is 5.5 millimeters, the large hole 13 has a diametrical dimension of 10 millimeters, and every adjacent two of large holes 13 have a spacing of 1.5 millimeters. A middle portion of the plate body 10 includes a central hole 15 larger than the large hole 13, for mounting of a scrape device to the second face 12 for scraping residues of plastics or non-plastics on the second face 12. The large hole 13 and the small hole 14 are preferably round, oval, polygonal or in other shapes.

In this embodiment, the large hole 13 of the plurality of holed units 20 form a plurality of hole layers 16, and the plurality of hole layers 16 are disposed around the middle portion of the plate body 10 and between the middle portion and an outer periphery of the plate body 10. Additionally, the large hole 13 of the plurality of holed units 20 form a plurality of hole rows 17, and the large holes 13 of every adjacent two of hole rows 17 are alternatively arranged, thus evenly distributing material which passes through the filtering plate, lowering resistance of material passing through the filtering plate, and increasing filtering efficiency. In operation, plastic material comes into the large hole 13 from the second face 12 via the second end 142 of the small hole 14, so that the small hole 14 which conically gradually expands is advantageous to filtering, and the plastic material will not jammed in the small hole 14.

The plate body 10 may be formed of steel, alloy or the like with sufficient strength. In this embodiment, the large hole 13 is formed by mechanical processing, and the small hole 14 is formed by laser processing from the first face 11 toward the second face 12. Mechanical processing can quickly produce the large hole 13 with the same diametrical dimension; however, mechanical processing has a limit to form the small hole having a diametrical dimension not smaller than 0.3 millimeters. As a result, the small hole 14 is preferably formed by laser processing because laser processing can precisely produce small hole which gradually expands without additional post-processing.

It is noted that in the laser processing, the laser head 40 projecting the laser is moved and kept a fixed relative distance relative to the first face 11 (maybe contact the first face 11). That is, the fixed relative distance is defined as that on a basis of the second face 12 the laser head 40 is nonlower than the first face 11, and the laser head 40 scanningly projects the laser 41 on overall area of the first face 11 which includes all of the plurality of holed units 20. As a result, there are holes formed, by the laser 41, on the first face 11 and the bottom face of respective one of the large holes 13, so that there is no need to further be positioned and focus on respective one of the large holes 13, thus having good production yield. Since the laser 41 is set to focus on positions adjacent the bottom faces of the large holes 13, there are shallow holes formed on a region of the plate body 10 except regions having the plurality of holed units 20, and the small holes 14 are formed, in a naturally conical shape, on and penetrate respective bottoms of the large hole 13. Preferably, surface treatment can be further carried out to remove the shallow holes, and thus the plate body 10 has a flat and smooth surface and is contamination-proof.

It is noted that the laser processing cannot proceed with only a limited thickness of the plate body 10. As a result, if the plate body 10 is over-thick, the laser 41 cannot focus well, so it a poor laser processing result. The distance between the first end 141 and the second end 142 of the small hole 14 is preferably in a suitable range; otherwise it can results in bad penetration of the laser 41 through the plate body, and can form bad small holes.

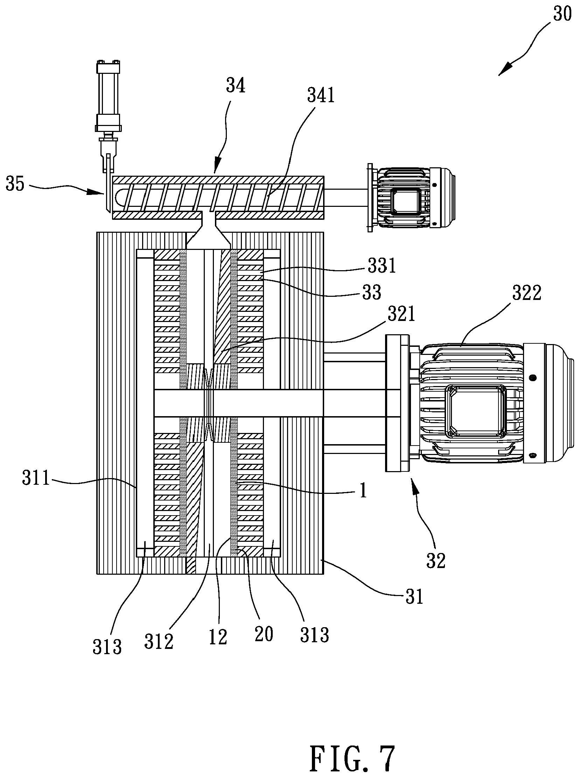

Referring to Fig. 7, a filtering device 30 is further provided. The filtering device 30 includes at least one filtering plate 1 such as the aforementioned one, a main body 31 and a scrape device 32. The main body 31 includes a chamber 311 and receives the at least one filtering plate 1, wherein the main body 31 may be a base including the filtering device 30 and other peripheral apparatus or/and structures. The at least one filtering plate 1 defines an infeed space 312 and at least one discharge space 313 in the chamber 311. Each of the at least one scrape device 32 includes at least one scraper 321 rotatably located at the second face 12 of the filtering plate 1 for scraping residues on the second face 12, and a driving device (such as motor) 322 for driving the at least one scraper 321. In this embodiment, a number of the at least one filtering plate 1 is two, a number of the at least one scraper 321 is two. The second faces 12 of the two filtering plates 1 separately face each other, and the second faces 12 of the two filtering plates 1 define the infeed space 312. Preferably, between each filtering plate 1 and the inner face of the chamber 311 is a supporting plate 33, thus improving supporting of the filtering plate 1 and avoiding deformation of the filtering plate 1. The supporting plate 33 includes a plurality of through holes 331 communicated with the holed units 20 of the filtering plate 1 and the discharge space 313.

The filtering device 30 further includes a discharge mechanism (such as dehydration granulator) 34 communicated with the infeed space 312. The discharge mechanism 34 can extrude, through a structure such as a spiral blade structure 341, the residues from the infeed space 312 out of the discharge mechanism 34, and the extruded-out residues are then cut by a cutting mechanism 35.

Given the above, the plate body is integrally formed of metal as one piece and good in structural strength; the small holes are directly formed on the plate body so that the manufacturing is quick and easy and so that it does not require separate parts to be respectively processed, holed and assembled; the small holes which are gradually enlarged facilitates filtering and discharging of materials, lowers the discharging pressure, decreases obstruction of materials, and increases durability.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A filtering plate (1), including:
a plate body (10), integrally formed of metal as one piece, including a first face (11) and a second face (12) in a widthwise direction thereof;
a plurality of holed units (20), each of the plurality of holed units (20) penetrating the first face (11) and the second face (12) of the plate body (10) and including a large hole (13) and a plurality of small holes (13) communicated with the large hole (13) and extending along the widthwise direction, each of the plurality of small holes (13) formed by laser processing from the first face (11) toward the second face (12), each of the plurality of small holes (13) including a first end (141) and a second end (142), the large hole (13) adjacent the first face (11), the first end (141) of respective one of the plurality of small holes (13) connected with the large hole (13), the second end (142) of respective one of the plurality of small holes (13) being adjacent the second face (12), the first end (141) being larger than the second end (142) in cross-sectional area, a distance between the first end (141) and the second end (142) being 0.2 to 3.5 millimeters (mm).

2. The filtering plate (1) of claim 1, wherein the large hole (13) has a diametrical dimension of 3 to 30 millimeters.

3. The filtering plate (1) of claim 1, wherein the small hole (13) has a diametrical dimension of 0.03 millimeters at the first end (141), and the small hole (13) has a diametrical dimension of 0.30 millimeters at the second end (142).

4. The filtering plate (1) of claim 1, wherein a distance between the first face (11) and the second face (12) is 1.5 to 6.0 millimeters.

5. The filtering plate (1) of claim 1, wherein the large holes (13) of the plurality of holed units (20) form a plurality of hole layers (16), the plurality of hole layers (16) disposed around a middle portion of the plate body (10) and between the middle portion and an outer periphery of the plate body (10).

6. The filtering plate (1) of claim 1, wherein a distance between the first face (11) and the second face (12) is 5.5 millimeters; a distance between the first end (141) and the second end (142) is 1.2 millimeters; the large hole (13) is formed by mechanical processing, the large hole (13) has a diametrical dimension of 10 millimeters; the small hole (13) has a diametrical dimension of 0.18 millimeters at the first end (141), the small hole (13) has a diametrical dimension of 0.25 millimeters at the second end (142); the small hole (13) conically gradually expands from the second end (142) toward the first end (141); the large holes (13) of plurality of holed units (20) form a plurality of hole rows (17), the large holes (13) of every adjacent two of hole rows (17) are alternatively arranged; every adjacent two of large holes (13) have a spacing of 1.5 millimeters; the large holes (13) of the plurality of holed units (20) form a plurality of hole layers (16), the plurality of hole layers (16) are disposed around a middle portion of the plate body (10) and between the middle portion and an outer periphery of the plate body (10); the middle portion includes a central hole (15) larger than the large hole (13).

7. A filtering device, including at least one of filtering plate (1) of claim 1, further including:
a main body (31), including a chamber (311), receiving the at least one filtering plate (1), the at least one filtering plate (1) defining an infeed space (312) and at least one discharge space (313) in the chamber (311);
a scrape device (32), including at least one scraper (321) rotatably located at the second face (12) of the filtering plate (1), configured for scraping residues on the second face (12).

8. The filtering device of claim 7, wherein a number of the at least one filtering plate (1) is two, a number of the at least one scraper (321) is two, the second faces (12) of the two filtering plates (1) separately face each other, and the second faces (12) of the two filtering plates (1) define the infeed space (312).

9. The filtering device of claim 7, further including a discharge mechanism (34) communicated with the infeed space (312), and the discharge mechanism (34) is configured to extrude the residues from the infeed space (312) out of the discharge mechanism (34).

10. A method of making the filtering plate (1) of claim 1, including following steps of:
providing the plate body (10);
forming the plurality of large holes (13) on the plate body (10) by mechanical processing from the first face (11);
using a laser (41), in a direction from the first face (11) toward the second face (12), to form the plurality of small holes (13) on a bottom face within respective one of the plurality of large hole (13) in such a manner that a laser head (40) projecting the laser (41) is moved and kept in a fixed relative distance, wherein the fixed relative distance is defined as that on a basis of the second face (12) the laser head (40) is nonlower than the first face (11).
